# FASCICULE DE BREVET EUROPEEN

(11) **EP 1 225 807 B1**
(45) Date de publication et mention de la délivrance du brevet: **26.04.2006**
(21) Numéro de dépôt: 00974653.8
(22) Date de dépôt: 03.11.2000
(51) Int. Cl.: A23B 4/30, A23B 4/24, A23B 4/02, A23B 4/16, A22C 17/08, A22C 21/04

(54) **PROCEDE ET INSTALLATION DE TRAITEMENT BACTERICIDE EN CONTINU DE PORTIONS DE CHAIR COMESTIBLE**
VERFAHREN UND VORRICHTUNG ZUR KONTINUIERLICHEN BAKTERIZIDBEHANDLUNG VON KONSUMFLEISCHABSCHNITTEN
METHOD AND INSTALLATION FOR CONTINUOUS BACTERICIDAL TREATMENT OF EDIBLE MEAT PORTIONS

(30) Priorité: 05.11.1999 FR 9913921
(43) Date de publication de la demande: 31.07.2002
(73) Titulaire: RHODIA CHIMIE, 92512 Boulogne Billancourt Cedex (FR)
(72) Inventeur: CHERICI, Ernest, F-40180 Yzosse (FR); BONNOT, Dominique, F-78380 Bougival (FR)
(74) Mandataire: Nargolwalla, Cyra
(86) Numéro de dépôt international: PCT/FR2000/003074
(87) Numéro de publication internationale: WO 2001/032027

(56) Documents cités:
- EP-A- 0 381 609
- EP-A- 0 584 955
- EP-A- 0 599 464
- EP-A- 0 679 335
- WO-A-98/20981
- WO-A-99/35916
- DE-A- 3 613 408
- US-A- 5 632 907
- US-A- 5 700 507
- US-A- 5 882 253
- PATENT ABSTRACTS OF JAPAN vol. 1999, no. 13, 30 novembre 1999 (1999-11-30) & JP 11 221007 A (ISHIKAWAJIMA HARIMA HEAVY IND CO LTD), 17 août 1999 (1999-08-17)

## Description

La présente invention est relative un procédé de traitement bactéricide en continu d'une succession de portions de chair comestible, notamment de carcasses d'oiseaux, du type dans lequel on met la surface de chaque portion en contact avec une solution bactéricide, à l'intérieur d'une enceinte de traitement. Elle s'applique notamment au traitement bactéricide de carcasses d'oiseaux au moyen d'une solution de phosphate trisodique.

Le traitement bactéricide de carcasses d'oiseaux au moyen de phosphate trisodique ou TSP dans les chaînes d'abattage, immédiatement après les opérations d'abattage, déplumage, éviscération et déjabotage, à été proposé sous deux formes : l'immersion des carcasses dans un bain de TSP et l'aspersion des carcasses avec la solution de TSP (US-A-5 700 507 ou EP-A-0 584 955).

Ces techniques présentent deux principaux inconvénients : la forte consommation de TSP d'une part, qui pèse sur l'économie du procédé du point de vue de la dépense en produit et également du dimensionnement des éléments de l'installation, et surtout les problèmes environnementaux du fait de la difficulté de maîtriser les rejets d'effluents phosphorés en conformité avec des normes officielles de sévérité croissante.

L'invention a pour but de réduire fortement la consommation de solution bactéricide et les quantités d'effluents sans altérer l'efficacité du traitement.

A cet effet, l'invention a pour objet un procédé du type précité, caractérisé en ce qu'on crée par pulvérisation dans l'enceinte un brouillard de ladite solution, et on fait traverser ce brouillard par lesdites portions.

L'invention a également pour objet une installation destinée à la mise en oeuvre du procédé défini ci-dessus. Cette installation, du type comprenant une enceinte de traitement ouverte à ses deux extrémités, un convoyeur adapté pour faire circuler lesdites portions à travers l'enceinte, et des moyens pour mettre ces portions en contact avec la solution bactéricide, est caractérisée en ce que lesdits moyens comprennent des moyens de pulvérisation de ladite solution sous la forme d'un brouillard.

Un exemple de mise en oeuvre de l'invention va maintenant être décrit en regard des dessins annexés, sur lesquels :
- la Figure 1 représente schématiquement une installation de traitement conforme à l'invention ; et
- la Figure 2 représente schématiquement un dispositif de pulvérisation de cette installation.

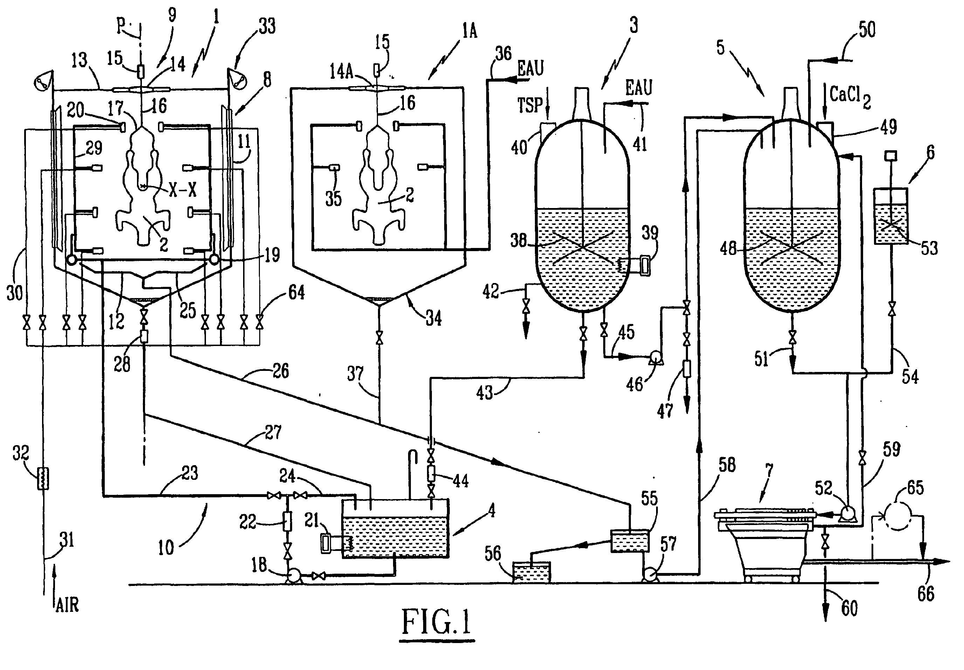

L'installation représentée à la Figure 1 comprend essentiellement : un tunnel 1 de traitement bactéricide en continu de carcasses de volaille 2 au moyen d'une solution de TSP; un tunnel 1A de rinçage des carcasses ainsi traitées ; une cuve 3 de préparation de la solution de traitement ; un bac 4 de solution de traitement ; une cuve 5 de neutralisation des effluents liquides du traitement ; une cuve 6 contenant du lait de chaux ; et un filtre-presse 7.

Le tunnel 1 comprend essentiellement une enceinte de traitement 8 de forme allongée, d'axe général X-X horizontal, un convoyeur 9 et des moyens 10 de création d'un brouillard de TSP dans l'enceinte 8.

L'enceinte 8, symétrique par rapport à un plan vertical longitudinal médian P, comprend essentiellement deux parois latérales 11, un fond inférieur 12 en forme de goulotte, et une paroi supérieure 13. Cette dernière comporte une fente longitudinale centrée sur le plan P, équipée d'un dispositif d'étanchéité supérieur 14 qui s'étend sur toute la longueur du tunnel. Ce dispositif 14 comporte, de chaque côté du plan P, une barre horizontale fixée au bord supérieur adjacent de la fente, et une brosse qui part de cette barre en direction du plan P. Les poils des deux brosses sont prévus sur une hauteur substantielle de plusieurs centimètres et s'interpénètrent dans la région du plan P.

Le convoyeur 9 comprend une bande sans fin dont le brin inférieur 15 court juste au-dessus du dispositif 14, dans le plan P. De cette bande pendent des câbles ou des tiges de suspension 16 qui se terminent par des crochets 17 pour les carcasses 2.

Les moyens 10 de création d'un brouillard dans l'enceinte 8 comprennent essentiellement le bac 4 de solution de TSP, une pompe 18, deux nourrices 19 disposées le long des parois latérales 11, et huit dispositifs 20 de pulvérisation de la solution.

Le bac 4 est équipé d'un dispositif 21 de chauffage de la solution à une température prédéterminée, typiquement de l'ordre de 90°C. La pompe 18 aspire au fond du bac et refoule, à travers un filtre à grumeaux 22, dans une conduite 23 d'alimentation des nourrices 19 ou dans une conduite 24 de recyclage de la solution vers le bac.

Au-dessus du fond 12 de l'enceinte 8 et sur toute la longueur de celle-ci est disposée une goulotte 25 de collectage de l'effluent du traitement qui goutte des carcasses 2. Du fond de cette goulotte part une conduite 26 d'évacuation de ces effluents vers une station de traitement non représentée.

Les bords longitudinaux de la goulotte 25 sont espacés latéralement des parois latérales 11 de l'enceinte. Par suite, le liquide qui ruisselle sur ces parois coule sur le fond 12 et se rassemble au point bas de celui-ci, d'où une conduite de recyclage 27, équipée d'un filtre à grumeaux 28, s'étend jusqu'au bac 4.

Les dispositifs de pulvérisation 20 sont destinés à pulvériser la solution de traitement au moyen d'air comprimé créant un effet de venturi. La dimension des gouttelettes créées par ces buses, de l'ordre de 0,05 mm, est choisie de manière à créer dans l'enceinte 8 un brouillard de la solution de traitement.

Chaque dispositif 20 est alimenté en solution de TSP par une conduite 29 qui part de la nourrice 19 correspondante, et en air comprimé par une conduite 30 issue d'une conduite d'air principale 31 équipée d'un réchauffeur 32.

Pour éviter la sortie du brouillard de TSP hors de l'enceinte 8, celle-ci est équipée, en plus du dispositif d'étanchéité supérieur 14, de moyens 33 d'extraction de gaz hors de l'enceinte, adaptés pour maintenir une légère dépression dans celle-ci.

Le tunnel de rinçage 1A, disposé à la suite du tunnel de traitement 1, comprend essentiellement une enceinte 34 de forme allongée, d'axe général horizontal, et des buses 35 d'aspersion d'eau de rinçage sur les carcasses 2. L'enceinte 34 a en section transversale une forme analogue à celle de l'enceinte 8, et sa paroi supérieure est équipée d'un dispositif d'étanchéité 14A identique au dispositif 14, traversé comme celui-ci par les organes de suspension 16. Les buses 35 sont alimentées en eau via une conduite 36. Une conduite d'évacuation 37 partant du point bas du fond inférieur de l'enceinte 34 rejoint la conduite 26.

La cuve de préparation 3 est équipée d'un agitateur motorisé 38, d'un réchauffeur 39, d'une ouverture supérieure 40 d'introduction de TSP, d'une conduite 41 d'alimentation en eau et d'une conduite 42 de prélèvement de solution pour analyse. Du point bas de cette cuve partent d'une part une conduite 43 munie d'un filtre à grumeaux 44 et débouchant dans le bac 4, et d'autre part une conduite 45 munie d'une pompe 46 et débouchant dans la cuve 5. En aval de la pompe, la conduite 45 comporte un piquage de purge 47.

La cuve de neutralisation 5 est équipée d'un agitateur motorisé 48, d'une ouverture supérieure 49 d'introduction de CaCl₂ et d'une entrée d'eau 50. Une conduite 51 équipée d'une pompe 52 relie le fond de la cuve 5 à l'entrée du filtre-presse 7.

La cuve 6, contenant du lait de chaux, est équipée d'un agitateur motorisé 53. De son fond part une conduite 54 qui rejoint la conduite 51 en amont de la pompe 52.

La conduite 26 est une conduite descendante qui débouche dans un bac de dégraissage 55. La graisse rassemblée en partie supérieure de ce bac est évacuée vers un réservoir d'équarrissage 56. Une pompe 57 aspire au fond du bac 55 et refoule dans une conduite 58 qui débouche dans la cuve 5.

Le filtre-presse 7 est dérivé du filtre-presse commercialisé sous la marque COMBIMASTER par la société italienne PADOVAN. Cet appareil, utilisé dans le pressage vinicole, a pour la présente application été équipé de toiles de filtration en polypropylène ayant une maille de 7,5 µm. De plus, des bandes du même matériau ont été collées sur les trous de couture de ces toiles. La sortie de filtrat du filtre-presse peut être reliée soit à la cuve 5, via une conduite 59, soit à une conduite 60 d'évacuation vers la station d'épuration.

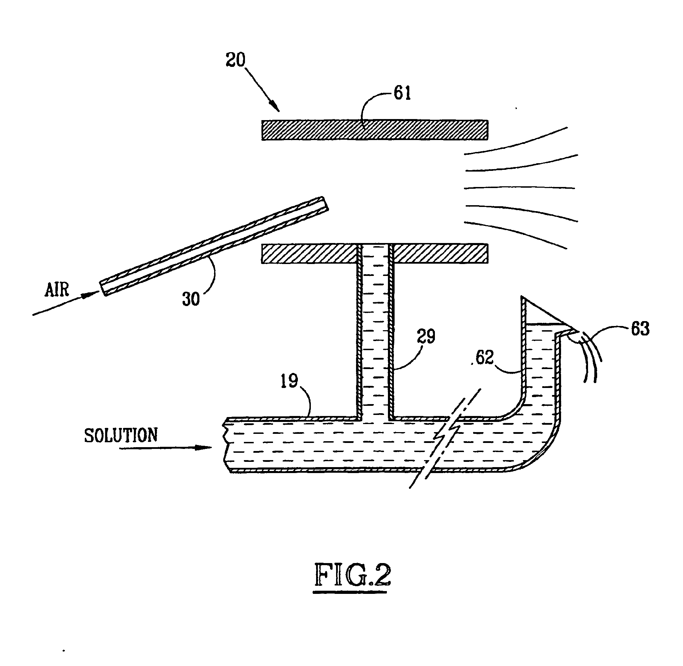

Comme représenté sur la Figure 2, chaque dispositif de pulvérisation 20 comprend une buse tubulaire 61 ouverte à ses deux extrémités ; sensiblement à mi-longueur de cette buse et à son point bas débouche la conduite 29 qui part de la nourrice 19 associée. De plus, dans chaque buse pénètre la conduite 30 d'air comprimé, qui débouche au voisinage du débouché de la conduite 29 dans la buse. De plus, comme représenté schématiquement sur la Figure 2, chaque nourrice 19 se termine par un tronçon ascendant 62 muni d'un déverseur 63.

L'installation décrite ci-dessus comporte par ailleurs des moyens classiques et non représentés de commande et de régulation.

En fonctionnement, les dispositifs de pulvérisation 20 créent en permanence dans l'enceinte 8 un brouillard de gouttelettes de TSP. Pour cela, les nourrices 19 sont alimentées en solution de TSP chauffée vers 90°C, au moyen de la pompe 18 et de la conduite 23.

L'air comprimé, chauffé vers 85°C en 32, aspire dans chaque buse 61, par effet venturi, de la solution de TSP arrivant dans la buse par la conduite 29 associée. Les nourrices 19 étant maintenues en permanence sous charge constante grâce au déverseur 61, on obtient facilement, par simple réglage des vannes 64 équipant les conduites 30, le débit de solution désiré à la sortie de chaque buse 61.

La solution de TSP sort de chaque buse 61 sous forme d'un brouillard dont les gouttelettes ont un diamètre de l'ordre de 0,05 mm, et les flux d'air vecteur provoquent une turbulence de l'atmosphère intérieure de l'enceinte 8. De cette manière, on obtient un traitement bactéricide satisfaisant des carcasses 2, aussi bien sur leur surface extérieure qu'à l'intérieur de leur trou d'éviscération, avec un débit de solution particulièrement faible.

Il est à noter que le chauffage de la solution dans le bac 4 permet d'optimiser le traitement bactéricide, et que le chauffage de l'air comprimé de pulvérisation contrebalance le refroidissement qui résulte de la détente au passage des buses. Au total, les gouttelettes de TSP atteignent les carcasses à une température d'environ 70°C.

De plus, la structure des buses 61 les rend pratiquement impossibles à obstruer, et la faible dimension des gouttelettes produites présente le double avantage d'une part de ne pas risquer de déchirement de la peau des volailles lors de l'impact, d'autre part de ne pas provoquer de début de cuisson de cette peau.

De nombreux agencements des buses 61 dans l'enceinte 8 peuvent être envisagés, en fonction de chaque application particulière. On notera qu'il n'est pas nécessaire que toutes les buses soient orientées directement vers les produits à traiter.

En variante, des moyens additionnels de mise en circulation forcée de l'atmosphère intérieure de l'enceinte 8 peuvent être prévues.

La solution de traitement est préparée, par exemple une fois par jour, dans la cuve 3. Un contrôle densimétrique en 42 permet d'ajuster la concentration en TSP.

L'effluent à évacuer, dégraissé en 55, est traité au CaCl₂ dans la cuve 5. Ceci provoque la précipitation du phosphore sous forme de P₂O₅. La boue résultante est lavée à l'eau de chaux, dans la conduite 51, pour en éliminer l'essentiel du chlore, puis le pressage réalisé en 7 produit un liquide à faible teneur en phosphore et en chlore, qui est envoyé en 60 à la station d'épuration. Le gâteau de filtration, éventuellement séché dans un four 65, est évacué en 66 pour être valorisé, par exemple par épandage et/ou compostage et/ou recyclage en minerai de phosphore et/ou utilisation en tant qu'engrais ou en tant que farine animale.

Les essais réalisés ont montré qu'à efficacité bactéricide comparable, le procédé décrit ci-dessus pouvait permettre de diviser la consommation en TSP par un facteur de l'ordre de deux et l'apport de phosphore à la station d'épuration par un facteur de l'ordre de vingt, par rapport aux procédés classiques par immersion et par aspersion.

## Revendications

1. Procédé de traitement bactéricide en continu d'une succession de portions (2) de chair comestible, notamment de carcasses d'oiseaux, du type dans lequel on met la surface de chaque portion en contact avec une solution bactéricide de phosphate trisadique, à l'intérieur d'une enceinte (8) de traitement, **caractérisé en ce qu'**on crée dans l'enceinte, par pulvérisation au moyen d'un gaz vecteur comprimé un brouillard de ladite solution où les gouttelettes ont un diamètre de l'ordre de 0,05 mm, et on fait traverser ce brouillard par lesdites portions.

2. Procédé suivant la revendication 1 **caractérisé en ce qu'**on évacue, éventuellement après dégraissage partiel, l'effluent liquide qui goutte desdites portions (2).

3. Procédé suivant la revendication 2, dans lequel la solution contient essentiellement du phosphate trisodique à titre d'agent bactéricide, **caractérisé en qu'**on précipite (en 5) le phosphore contenu dans l'effluent liquide avant d'évacuer celui-ci, notamment par réaction avec du CaCl₂.

4. Procédé suivant la revendication 3, **caractérisé en ce qu'**on presse (en 7) les boues résultant de la précipitation, on envoie (en 58) le filtrat à une station d'épuration, et on évacue le gâteau de filtration.

5. Procédé suivant la revendication 4, **caractérisé en ce qu'**on lave les boues au lait de chaux avant ledit pressage.

6. Procédé suivant la revendication ou **caractérisé en ce qu'**on sèche ledit gâteau (en 63) avant son évacuation.

7. Procédé suivant l'une quelconque des revendications 4 à 6 **caractérisé en ce qu'**on valorise ledit gâteau par épandage et/ou compostage et/ou recyclage en minerai de phosphore et/ou utilisation en tant qu'engrais ou en tant que farine animale.

8. Procédé suivant l'une quelconque des revendications 2 à 7, **caractérisé en ce qu'**on recueille séparément (en 12) la solution qui ruisselle sur les parois de l'enceinte, et on la recycle (en 27) pour la formation dudit brouillard.

9. Procédé suivant l'une quelconque des revendications 1 à 8, **caractérisé en ce qu'**on chauffe la solution (en 21) avant de la pulvériser.

10. Procédé suivant la revendication 9, **caractérisé en ce qu'**on chauffe la solution à une température de l'ordre de 90°C.

11. Procédé suivant l'une quelconque des revendications 1 à 10, **caractérisé en ce qu'**on réalise la pulvérisation au moyen d'air comprimé.

12. Procédé suivant la ravendication 11, **caractérisé en ce qu'**on chauffe le gaz vecteur (en 32).

13. Procédé suivant la revendication 12, **caractérisé en ce qu'**on chauffe le gaz vecteur vers 85°C.

14. Procédé suivant l' une quelconque des revendications 1 à 12, **caractérisé en ce qu'**on provoque une agitation additionnelle de l'atmosphère de l'enceinte (8).

15. Installation pour la mise en oeuvre du procédé suivant l'une quelconque des revendications 1 à 14, du type comprenant une enceinte de traitement (8) ouverte à ses deux extrémités, un convoyeur (9) adapté pour faire circuler lesdites portions (2) à travers l'enceinte, et des moyens (20) pour mettre ces portions en contact avec la solution bactéricide, **caractérisée en ce que** lesdits moyens (20) comprennent des moyens de pulvérisation de ladite solution sous la forme d'un brouillard où les goutelettes ont un diamètre de l'ordre de 0,05 mm, au moyen d'un gaz vecteur comprimé.

16. Installation suivant la revendication 15, **caractérisée en ce qu'**elle comprend des moyens (25) de collectage de l'effluent liquide qui goutte desdits portions (2), et des moyens (26) d'évacuation de cet affluent.

17. Installation suivant la revendication 16, **caractérisée en ce que**, la solution contenant essentiellement du phosphate trisodique à titre d'agent bactéricide, lesdits moyens d'évacuation comprennent des moyens (5) de précipitation du phosphore contenu dans l'effluent liquide, notamment par réaction avec du CaCl₂.

18. Installation suivant la revendication 17, **caractérisée en ce qu'**elle comprend un filtre-presse (7) alimenté par les boues issues desdits moyens de précipitation.

19. Installation suivant la revendication 18, **caractérisée en ce qu'**elle comprend des moyens (6) de lavage des boues au lait de chaux, interposés entre les moyens de précipitation (5) et le filtre-presse (7).

20. Installation suivant la revendication 18 ou 19, **caractérisée en ce qu'**elle comprend un four (63) de séchage du gâteau de filtration.

21. Installation suivant l'une quelconque des revendications 16 à 20, **caractérisée en ce qu'**elle comprend des seconds moyens de colleecage (12) adaptés pour recueillir séparément dudit effluent liquide la solution qui ruisselle sur les parois de l'enceinte (8), et des moyens (27) de recyclage de la solution ainsi recueillie vers lesdits moyens de pulvérisation (20).

22. Installation suivant l'une quelconque des revendications 15 à 21, **caractérisée en ce qu'**elle comprend des moyens (21) de chauffage de la solution à pulvériser.

23. Installation suivant l'une quelconque des revendications 15 à 22, **caractérisée en ce que** les moyens de pulvérisation (20) comprennent des buses de pulvérisation (61) à gaz vecteur comprimé, notamment à air comprimé.

24. Installation suivant la revendication 23, **caractérisée en ce qu'**elle comprend des moyens (32) de chauffage du gaz vecteur.

25. Installation suivant l'une quelconque des revendications 15 à 24, **caractérisée en ce qu'**au moins une partie des moyens de pulvérisation (20) n'est pas dirigée directement vers lesdites portions (2).

## Patentansprüche

1. Verfahren zur kontinuierlichen bakteriziden Behandlung einer Reihe von Stücken (2) essbaren Fleisches, insbesondere Geflügelschlachtkörper, der Art, bei der die Oberfläche jedes Stücks im Inneren eines Behandlungsraums (8) mit einer bakteriziden Trinatriumphosphatlösung in Kontakt gebracht wird, **dadurch gekennzeichnet, dass** in dem Raum ein Nebel der genannten Lösung, dessen Tropfen einen Durchmesser von ungefähr 0,05 mm besitzen, durch Zerstäubung mithilfe eines Trägergases erzeugt und ein Entlangströmen dieses Nebels an den genannten Stücken bewirkt wird.

2. Verfahren nach Anspruch 1, **dadurch gekennzeichnet, dass** das flüssige Abprodukt, das von den genannten Stücken (2) tropft, eventuell nach teilweiser Entfettung, abgeleitet wird.

3. Verfahren nach Anspruch 2, bei dem die Lösung im Wesentlichen Trinatriumphosphat als Bakterizid enthält, **dadurch gekennzeichnet, dass** vor der Ableitung des flüssigen Abprodukts das in diesem enthaltene Phosphor, insbesondere durch Reaktion mit CaCl₂, abgesondert wird (in 5).

4. Verfahren nach Anspruch 3, **dadurch gekennzeichnet, dass** die bei der Absonderung entstehenden Schlämme (in 7) gepresst werden, das Filtrat (in 58) einer Kläranlage zugeführt wird, und der Filterkuchen abgeleitet wird.

5. Verfahren nach Anspruch 4, **dadurch gekennzeichnet, dass** die Schlämme vor dem genannten Pressen mit Kalkmilch gewaschen werden.

6. Verfahren nach Anspruch 4 oder 5, **dadurch gekennzeichnet, dass** der genannte Kuchen (in 63) vor seiner Ableitung getrocknet wird.

7. Verfahren nach einem der Ansprüche 4 bis 6, **dadurch gekennzeichnet, dass** der genannte Kuchen durch Ausbringen und/oder Kompostieren und/oder Recycling zu Phosphormineral und/oder Verwendung als Dünger oder Tiermehl verwertet wird.

8. Verfahren nach einem der Ansprüche 2 bis 7, **dadurch gekennzeichnet, dass** die Lösung, die an den Wänden des Raums herunterrinnt, separat aufgefangen (in 12) und für die Bildung des genannten Nebels recycelt wird (in 27).

9. Verfahren nach einem der Ansprüche 1 bis 8, **dadurch gekennzeichnet, dass** die Lösung vor dem Zerstäuben erhitzt wird (in 21).

10. Verfahren nach Anspruch 9, **dadurch gekennzeichnet, dass** die Lösung auf eine Temperatur von ungefähr 90°C erhitzt wird.

11. Verfahren nach einem der Ansprüche 1 bis 10, **dadurch gekennzeichnet, dass** das Zerstäuben mithilfe von Druckluft erfolgt.

12. Verfahren nach Anspruch 11, **dadurch gekennzeichnet, dass** das Trägergas erhitzt wird (in 32).

13. Verfahren nach Anspruch 12, **dadurch gekennzeichnet, dass** das Trägergas auf ungefähr 85°C erhitzt wird.

14. Verfahren nach einem der Ansprüche 1 bis 12, **dadurch gekennzeichnet, dass** eine zusätzliche Bewegung der Atmosphäre des Raums (8) erzeugt wird.

15. Anlage für die Umsetzung des Verfahrens nach einem der Ansprüche 1 bis 14 der Art, die einen an beiden Enden offenen Behandlungsraum (8), einen geeigneten Förderer (9) für den Transport der genannten Stücke (2) durch den Raum, und Mittel (20), um diese Stücke mit der bakteriziden Lösung in Kontakt zu bringen, aufweist, **dadurch gekennzeichnet, dass** die genannten Mittel (20) Mittel zum Zerstäuben der genannten Lösung in Form eines Nebels, dessen Tropfen einen Durchmesser von ungefähr 0,05 mm besitzen, mithilfe eines Trägergases aufweisen.

16. Anlage nach Anspruch 15, **dadurch gekennzeichnet, dass** sie Mittel (25) zum Auffangen des von den genannten Stücken (2) tropfenden flüssigen Abprodukts und Mittel (26) zum Ableiten dieses Abprodukts aufweist.

17. Anlage nach Anspruch 16, **dadurch gekennzeichnet, dass**, da die Lösung im Wesentlichen Trinatriumphosphat als Bakterizid enthält, die genannten Ableitungsmittel Mittel (5) zum Absondern des im flüssigen Abprodukt enthaltenen Phosphors, insbesondere durch Reaktion mit CaCl₂, aufweisen.

18. Anlage nach Anspruch 17, **dadurch gekennzeichnet, dass** sie eine Filterpresse (7) aufweist, der die in den genannten Absonderungsmitteln entstehenden Schlämme zugeführt werden.

19. Anlage nach Anspruch 18, **dadurch gekennzeichnet, dass** sie zwischen den Absonderungsmitteln (5) und der Filterpresse (7) positionierte Mittel (6) zum Waschen der Schlämme mit Kalkmilch aufweist.

20. Anlage nach Anspruch 18 oder 19, **dadurch gekennzeichnet, dass** sie einen Ofen (63) zum Trocknen des Filterkuchens aufweist.

21. Anlage nach einem der Ansprüche 16 bis 20, **dadurch gekennzeichnet, dass** sie zweite Auffangmittel (12), die dazu geeignet sind, die von den Wänden des Raums (8) herunterrinnende Lösung getrennt vom genannten flüssigen Abprodukt aufzufangen, und Mittel (27) zum Recycling der auf diese Weise aufgefangenen Lösung in Richtung der genannten Zerstäubungsmittel (20) aufweist.

22. Anlage nach einem der Ansprüche 15 bis 21, **dadurch gekennzeichnet, dass** sie Mittel (21) zum Erhitzen der zu zerstäubenden Lösung aufweist.

23. Anlage nach einem der Ansprüche 15 bis 22, **dadurch gekennzeichnet, dass** die Zerstäubungsmittel (20) Zerstäubungsdüsen (61) für verdichtetes Trägergas, insbesondere Druckluft, aufweisen.

24. Anlage nach Anspruch 23, **dadurch gekennzeichnet, dass** sie Mittel (32) zum Erhitzen des Trägergases aufweist.

25. Anlage nach einem der Ansprüche 15 bis 24, **dadurch gekennzeichnet, dass** mindestens ein Teil der Zerstäubungsmittel (20) nicht direkt auf die genannten Stücke (2) gerichtet ist.

## Claims

1. A process for the continuous bactericidal treatment of a succession of edible meat portions (2), in particular from bird carcasses, of the type in which the surface of each portion is brought into contact with a bactericidal trisodium phosphate solution in the interior of a treatment chamber (8), **characterised in that** a mist of said solution is created in the chamber by spraying by means of a compressed carrier gas, the droplets are of a diameter of about 0.05 mm, and said portions are caused to pass through said mist.

2. A process according to claim 1 **characterised in that** the liquid effluent which drips from said portions (2) is discharged, optionally after partial degreasing.

3. A process according to claim 2 wherein the solution essentially contains trisodium phosphate as a bactericidal agent, **characterised in that** the phosphorus contained in the liquid effluent is precipitated (5) prior to discharging same, in particular by reaction with CaCl₂.

4. A process according to claim 3 **characterised in that** the sludges resulting from precipitation are pressed (at 7), the filtrate is passed (at 58) to a purification station and the filter cake is discharged.

5. A process according to claim 4 **characterised in that** the sludges are washed with milk of lime prior to said pressing operation.

6. A process according to claim 4 or claim 5 **characterised in that** said cake is dried (at 63) prior to its discharge.

7. A process according to any one of claims 4 to 6 **characterised in that** value is imparted to said cake by spreading and/or composting and/or recycling as phosphorus ore and/or use as fertiliser or as animal meal.

8. A process according to any one of claims 2 to 7 **characterised in that** the solution which runs down on the walls of the chamber is collected separately (at 12) and it is recycled (at 27) for the formation of said mist.

9. A process according to any one of claims 1 to 8 **characterised in that** the solution is heated (at 21) before it is sprayed.

10. A process according to claim 9 **characterised in that** the solution is heated to a temperature of about 90°C.

11. A process according to any one of claims 1 to 10 **characterised in that** the spraying operation is effected by means of compressed air.

12. A process according to claim 11 **characterised in that** the carrier gas is heated (at 32).

13. A process according to claim 12 **characterised in that** the carrier gas is heated to about 85°C.

14. A process according to any one of claims 1 to 12 **characterised in that** additional agitation of the atmosphere of the chamber (8) is caused.

15. An installation for carrying out the process according to any one of claims 1 to 14 of the type comprising a treatment chamber (8) open at its two ends, a conveyor (9) adapted to circulate said portions (2) through the chamber, and means (20) for bringing said portions into contact with the bactericidal solution, **characterised in that** said means (20) comprise means for spraying said solution in the form of a mist in which the droplets are of a diameter of about 0.05 mm by means of a compressed carrier gas.

16. An installation according to claim 15 **characterised in that** it comprises means (25) for collecting the liquid effluent which drips from said portions (2) and means (26) for the discharge of said effluent.

17. An installation according to claim 16 **characterised in that**, the solution essentially containing trisodium phosphate as the bactericidal agent, said discharge means comprise means (5) for precipitation of the phosphorus contained in the liquid effluent, in particular by reaction with CaCl₂.

18. An installation according to claim 17 **characterised in that** it comprises a filter press (7) fed with the sludges from said precipitation means.

19. An installation according to claim 18 **characterised in that** it comprises means (6) for washing the sludges with milk of lime, said means being interposed between the precipitation means (5) and the filter press (7).

20. An installation according to claim 18 or claim 19 **characterised in that** it comprises an oven (63) for drying the filter cake.

21. An installation according to any one of claims 16 to 20 **characterised in that** it comprises second collecting means (12) adapted for collecting separately from said liquid effluent the solution which runs down on the walls of the chamber (8) and means (27) for recycling the solution collected **in that** way to said spraying means (20).

22. An installation according to any one of claims 15 to 21 **characterised in that** it comprises means (21) for heating the solution to be sprayed.

23. An installation according to any one of claims 15 to 22 **characterised in that** the spraying means (20) comprise spraying nozzles (61) using compressed carrier gas, in particular compressed air.

24. An installation according to claim 23 **characterised in that** it comprises means (32) for heating the carrier gas.

25. An installation according to any one of claims 15 to 24 **characterised in that** at least a part of the spraying means (20) is not directed directly towards said portions (2).
